# EUROPEAN PATENT SPECIFICATION

(11) **EP 1 095 488 B1**
(45) Date of publication and mention of the grant of the patent: **20.10.2004**
(21) Application number: 99929568.6
(22) Date of filing: 05.07.1999
(51) Int. Cl.: H04L 12/56, H04N 7/50, G11B 20/10

(54) **TRANSCODERS FOR FIXED AND VARIABLE RATE DATA STREAMS**
TRANSKODIERER FÜR DATENSTRöME MIT FESTEN UND VERÄNDERLICHEN DATENRATEN
TRANSCODEURS POUR DES TRANSMISSIONS DE DONNEES A DES TAUX FIXES ET VARIABLES

(30) Priority: 03.07.1998 GB 9814513; 07.04.1999 GB 9907918
(43) Date of publication of application: 02.05.2001
(73) Proprietor: DOLBY LABORATORIES LICENSING CORPORATION, San Francisco California 94103-4813 (US); CRAVEN, Peter Graham, Lancing, West Sussex BN15 8EA (GB); Law, Malcolm James, Hove, East Sussex BN3 8BP (GB)
(72) Inventor: CRAVEN, Peter, Graham, Lancing, West Sussex BN15 8EA (GB); LAW, Malcolm, James, Hove, East Sussex BN3 8BP (GB); STUART, John, Robert, Cambridge CB3 0DP (GB)
(74) Representative: Hoffmann, Eckart, Dipl.-Ing.
(86) International application number: PCT/GB1999/002138
(87) International publication number: WO 2000/002357

(56) References cited:
- EP-A- 0 784 409
- US-A- 5 623 424
- US-A- 5 684 714

## Description

### Field of Invention

The invention relates to the transmission of a recording through mastering, authoring and delivery to the consumer, where some links in the chain require transmission at a fixed data-rate, and others preferably require a variable data-rate in order to reduce the total amount of data.

### Background to the Invention

It is known that an audio signal may be subject to a compression process (for example, lossless compression) which produces a compressed stream of varying data-rate.

In an application such as DVD, two parameters are of importance: the peak data-rate; and the total amount of data. On the DVD audio disc as currently proposed, the peak data-rate must not exceed 9.6 Mbits/s as the disc cannot deliver data faster than this. On 6-channel audio recordings made to 24-bit precision and with 96 kHz sampling frequency, this limit is a significant constraint, and P.G. Craven & M.A. Gerzon, 'Lossless Coding for Audio Discs', *J. Audio Eng. Soc.,* vol. 44 no. 9 pp. 706-720 (September 1996), P.G. Craven, M.J. Law & J.R. Stuart, 'Lossless Compression using IIR Prediction Filters', *J. Audio Eng. Soc.* (Abstracts), vol. 45 no. 5 p. 404 (22 March 1997) (Preprint 4415) and GB 2323754 describe methods directed towards minimising the data-rate during peak passages. In addition the total amount of data on the disc is restricted to 4.7 Gbytes, so it is advantageous to reduce the data-rate below 9.6 Mbits/s when possible so as to maximise the playing time.

Thus, the stream as recorded on the disc needs to be variable-rate in order to maximise the playing time.

On the other hand, many protocols for the serial transmission of data assume a fixed data-rate. Moreover, a fixed-rate stream can have a much simpler interface to a subsequent processing block. Typically the data is handled by a transport layer which is ignorant of its internal structure, and then passed to a decoder or other processing block. In a software implementation, a decoder will typically be called in order to decode a block of audio samples, for example 80 samples. If the input to the decoder is a fixed rate stream, the transport layer and the software 'harness' that organises the data-flow can know the data rate and thus provide to the decoder the correct number of bits of input data to allow the decoder to produce a block of decoded samples. However, in the variable rate case, the required number of bits is not easily known to the harness. One solution is for the decoder to request a dynamically varying number of samples from the harness: this requires two-way communication. Alternatively, if the encoder knows the size and alignment of the blocks that the decoder will decode, then the encoder can insert information in the stream's transport layer that will allow the harness to pass the required number of bits to the decoder before the decoder starts to decode the block. This is the MPEG model.

Two-way communication between the decoder and the transport layer is extremely inconvenient if the decoder is separated from the hardware that controls the rate of replay from the disc and associated buffering, (for example, it is a separate sub-unit of a player, or it is a separate item external to a player). The MPEG model has the advantage that it avoids two-way communication, but it introduces considerable complications in other respects and constrains the way in which decoders operate. Neither of the variable-rate solution is without its problems.

In general, a compressed stream will not be a homogenous stream of bits, but will be divided internally into units representing a given number of audio samples: optimally 1000 to 2000 audio samples. We will refer to these units as packets: the IEC 958 transport protocol uses the term 'burst', and compression systems such as AC-3 or MPEG use terms such as 'frame' or 'sync frame'. The packet will start with a 'packet header', which can include the data-rate (or the number of bits in the packet, which is equivalent if the number of samples represented by the packet is known). It might be thought that, given this information, the transport layer will know how many bits to send to the player at each stage, so that the need for two-way communication does not arise. However, it is in general inconvenient to require the decoder to decode a complete packet of 1000 to 2000 samples on each call, and if the decoder decodes fewer samples than this, the question of how much data it needs for each call arises once again. (The MPEG model avoids this problem by requiring the decoder to decode a complete packet, or "access unit", and the packets length may then be reduced to the order of 100 samples. The shorter packets do however incur higher packet overheads).

It is well understood that a variable-rate stream can be converted into a fixed-rate stream having a rate equal to the peak rate of the variable-rate stream, simply by stuffing with zeroes (or other fill-in data) during periods of less than the peak data rate. Similarly the fixed-rate stream can be converted back to a variable-rate stream by removing the zeroes or padding. Assuming (as is normal) that all the zeroes (or padding) are removed, there is an unique variable-rate stream "corresponding" to the fixed rate stream. In the reverse direction, the amount of stuffing that can be added is arbitrary, so there are many fixed-rate streams "corresponding" to a variable-rate stream, but none can have a data-rate lower than that of the peak data-rate of the variable-rate stream.

In GB 2323754 however, a method is described whereby the data rate of the fixed rate stream can be somewhat less than the peak rate of a variable rate stream from which it was derived. This is achieved by "repacketising", making use of the existence of a FIFO buffer in the decoder so that the decoder core can be supplied with data at a higher rate than that from the input stream, for short periods. The amount by which the data rate is less than the peak of the variable rate stream depends on the size of the FIFO buffer and the nature of the signal.

### Summary of the Invention

These problems with the prior art are overcome by an encoder as set forth in claim 1. Advantageous embodiments are set forth in the dependent claims.

### Brief Description of the Drawings

Examples of the present invention will now be described with reference to the accompanying drawings, in which:
Figure 1 shows in simplified schematic form the layout of audio data stored on a DVD;
Figure 2 shows schematically the basic elements of an MLP encoder;
Figure 3 shows schematically the basic elements of an MLP decoder;
Figure 4 shows schematically the basic elements of a simplified two channel MLP decoder;
Figure 5 shows the basic elements in an encoding and decoding system, and represents the delays involved;
Figure 6 shows a DVD player which has the option to decode to PCM audio, or to output a fixed rate compressed stream; and,
Figure 7 shows a mastering system followed by an authoring system for writing data to a DVD.

### Detailed Description of the Invention

The processing of audio data in the DVD-Audio format is one example of a practical application of this invention, and this particular example is described below.

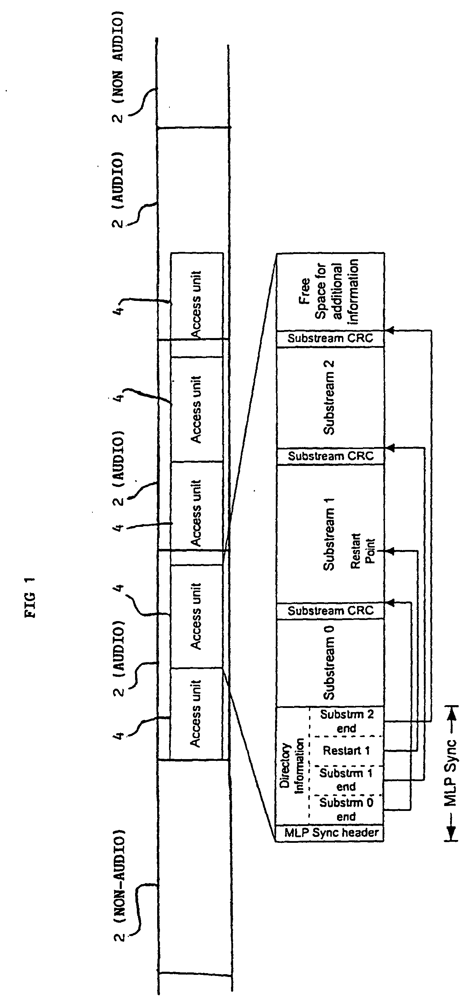

As represented in Figure 1, data is stored on a DVD as a series of sectors 2, for example of 2 kilobytes. Some of these sectors are allocated to audio data, and some are allocated to non-audio, for example video data. Following the MPEG model, the audio data is arranged on the disc as a sequence of so-called Access Units 4, which each comprise an encoded version of a so-called Presentation unit. A Presentation Unit is a block of data representing approximately 1 ms of audio data. For a 96 KHz sampling rate, each Presentation Unit contains 80 samples of digital audio data encoded using Pulse Code Modulation (PCM). An Access Unit comprises an MLP sync followed by the data for one or more substreams. Different substreams contain data for different speaker channels.

The Presentation Units are losslessly encoded to form the Access Units, using an encoding scheme proposed by the applicant, and which is the subject of UK Patent Application No. 9907918.8, from which priority is claimed. This scheme is termed "Meridian Lossless Packing" (MLP), and gives rise to Access Units of variable length, typically around 1 Kilobyte. They may also cross the boundaries between disc sectors. This patent application is concerned with certain aspects which are being implemented in MLP. Therefore a general discussion of MLP follows, which incorporates the aspects according to this invention.

However, it should be understood that MLP is only one example of encoding scheme which can be adapted to enable this invention to be implemented.

MLP is a lossless encoding system which provides a core compression method, which reduces the data size and/or data rate of an audio object. In terms of the encoder operation, this core may be embodied in a BIN or binary disk file which can be decoded directly to recover the original audio. MLP-compressed audio is normally then given a packetising layer in a manner that suits the target transport method. Obvious transport mechanisms include computer disc, DVD disc, SPDIF interface and Firewire interface. For each of these fixed-rate or variable-rate streams can be envisaged.

For these transport systems MLP has been structured so that the core coded audio can be packetised into fixed-rate or variable-rate streams and so that a re-packetiser can convert MLP-encoded audio between the transport variants and/or between fixed-rate and variable-rate streams without requiring an intermediate decode-encode process.

The MLP bitstream is a flexible format for describing multichannel audio. To decode a large number of channels at a high sampling rate will, however, always be a computationally demanding task. Consequently, MLP has been defined in a hierarchical manner so that decoders of lesser capability can easily extract the audio signals they require, skipping over parts that are intended for more advanced decoders.

The MLP bitstream carries a number of substreams containing the audio data. The number of substreams will depend on the application. For example, 2-channel decoders only need to decode substream 0; standard multichannel decoders must decode substream 0, substream 1 or both. In general, additional substreams may be provided within the MLP stream for use by more advanced decoders.

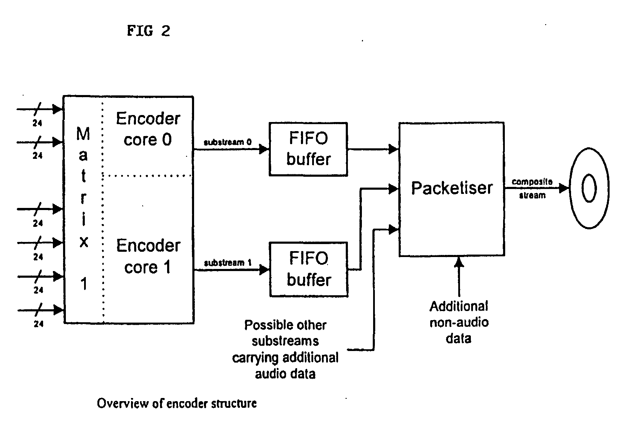

As shown in Figure 2, an MLP encoder takes the input channels and divides them (possibly after matrixing) into groups appropriate to the various classes of decoder. Each group is then processed by an encoder core to produce a substream of variable-rate compressed data.

For example, a normal 5·1 channel disc will have 6 channels which can be decoded by a standard decoder. These would be matrixed and divided into groups of 2 and 4 channels, the matrix being chosen so that the 2-channel signal is an acceptable mix for the 2-channel listener. The two groups are then each encoded by separate encoder cores to produce substreams 0 and 1.

The encoder passes each substream through a FIFO buffer to the Packetiser, which interleaves the substreams to produce the composite bitstream, consisting of a regular stream of the Access Units. Optionally, additional data may be added at this point, and these data can occupy the space that would otherwise be wasted.

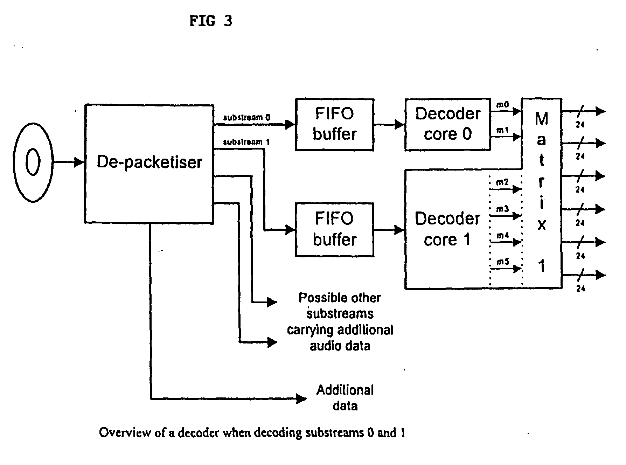

In the generic MLP decoder of Figure 3, the Depacketiser receives the packets or access units and retrieves the substreams, which it places in one or more FIFO buffers. It may optionally recover any additional data at this point. The data in each FIFO buffer will be a pure substream with all packet-level information removed.

After buffering, each substream is passed to a decoder core. In the simple case where a substream contains the data for a completely independent group of channels, the decoder core recovers these channels. Figure 3 illustrates the more advanced case where the matrixing in the encoder has spread information across substream boundaries. A unique feature of MLP is lossless matrixing, which allows exact recovery of the original signal, without the rounding errors expected from the standard use of matrices.

As shown in Figures 2 and 3, the encoder and decoder cores each incorporate a matrix, in fact a lossless matrix. Essentially, the matrix allows linear dependencies within the group of channels to be exploited in order to reduce the data rate.

When several substreams carry the data for a group of channels, the last substream carries the necessary matrix coefficients for the whole group. Thus, in the example shown in Figure 3, substream 1 carries the data for four channels, plus the matrix coefficients for six channels. Decoder 1 partially decodes the four channels of substream 1, then takes in two partially decoded channels from decoder 0, and all six channels participate in the final matrixing.

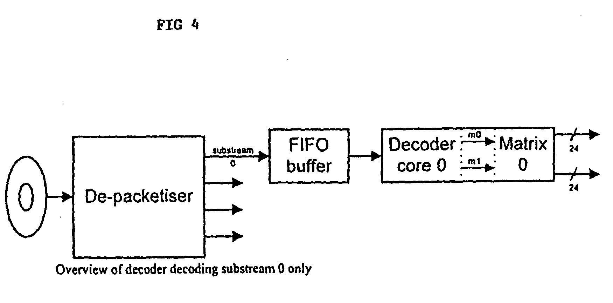

Substream 0 also contains matrixing information, but this is used only if substream O is decoded in isolation, as shown in Figure 4. It follows that the two signals that result from decoding substream 0 alone need not be identical to the first two signals that result from decoding substreams 0 and 1. This is the key to the economical decoding of a two-channel downmix. In other words, a 6-channel original signal can be recovered from a 2-channel downmix, plus four other signals.

Each encoder core produces a variable-rate substream, the data rate being greatest during peaks of high treble energy. The FIFO buffers in Figure 2 are crucial in reducing the peak data rate on the disc. These FIFO buffers in the encoder fill during passages of peak data rate from the encoder cores, and empty when the data rates from the encoder cores are lower than the maximum data rate of the transmission medium or carrier.

Correspondingly, the FIFO buffers in the decoder (Figure 3) are filled during passages of lower data rate, and empty during passages of peak rate, thus allowing peak data rates higher than the transmission maximum to be delivered to the decoder cores.

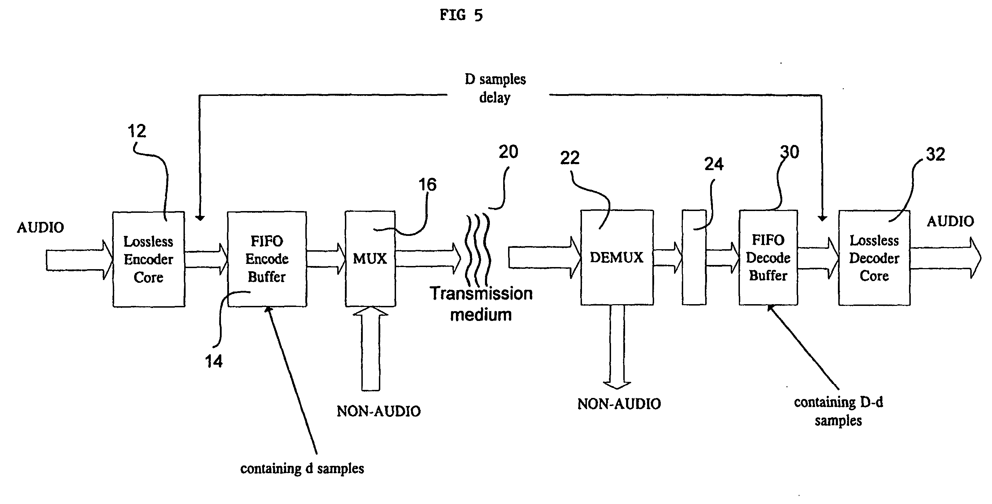

Buffering introduces delay, and the delay is variable as the buffers fill and empty. Figure 5 highlights the delay aspects involved in the encode-decode process: it is clear that when a FIFO buffer in the encoder fills, the corresponding FIFO buffer in the decoder must empty, so that the total delay D is constant.

On typical audio signals the data rate fluctuates substantially over a period of a few tens of milliseconds, and FIFO buffering with a total delay D of order 50-100 ms generally reduces the peak data rate by about 2 bits per sample. This gives an advantage of nearly 1 Mbits/s for 5 channels sampled at 96 kHz.

When the transmission does not take place in real-time, as with disc recording, the total delay D in the encoding and decoding is not a relevant consideration. Operationally, the important issue is the decode latency, which directly affects the queuing time experienced by the user. This is the time between the decoder first receiving the compressed data stream and being able to produce the decoded samples. A major component of this is the buffer latency, which is simply the delay through the decoder's FIFO buffer.

The maximum buffer latency in the standard application is 75 ms, but for the vast majority of the time the latency will be approximately 1 ms. The filling and emptying of the decoder's FIFO buffer is under the control of the encoder, which arranges that the decoder's buffer is empty for most of the time (giving very low buffer latency), but fills just before passages that result in the highest rate of compressed data, for example one containing a cymbal crash. Thus it is only immediately prior to such a peak event that the buffer latency will be near its maximum value.

The standard decoder may be provided with 90,000 bytes of buffer memory, but a 2-channel decoder can use less than 3 kbytes total. This is because each substream is separately buffered (Figure 1) and buffering can be removed from a downmix substream with no impact on data rate.

Taking into account the time taken to find the various headers, the total decode latency at 96 kHz is between 2 and 10 ms during normal passages, with a worst case of 105 ms immediately before a peak.

The article "Lossless Coding for Audio Discs", J.Audio Eng.Soc., vol 44 no. 9 pp. 706-720 (September 1996) and WO 96/37048 published 21 November 1996 contain discussions of some of the principles used in MLP.

Essentially, the encoder and decoder cores utilise matrix transformations and Huffman coding and decoding.

Matrixing is used to minimise inter-channel dependency, and hence the total transmitted data rate. For example, if two channels are very similar it is more efficient to transmit one of them and the difference between the two. It is not adequate for the decoder simply to multiply by the inverse of the encoder's matrix, as the rounding errors involved in the matrix multiplications will result in lossy reconstruction of the original. This problem is overcome using lossless matrixing, in which the encode matrix includes carefully placed quantisers which ensure that the rounding errors are precisely known and can be cancelled using similar quantisers in the decoder. Each lossless matrix is a cascade of primitive matrices, each primitive matrix modifying just one channel.

Huffman coding is a widely used technique for saving data rate when not all possible values are equally likely. MLP uses 4 different Huffman tables, including the well known Rice code, to cater for differing signal statistics. These tables are all designed to scale with signal level and are simple to decode algorithmically (not using tables), though it will often be more efficient to use tables in software decoders.

As the length of a Huffman-coded sample is not known until it is decoded and the Huffman-coded samples are interleaved together on a sample-by-sample basis, the Huffman decoder must combine the operations of de-interleaving and decoding.

Timing information is provided in the headers of the Access Units, to enable timing control of the data capture operation from the disc. In particular, a Decoder Time Stamp (DTS) is associated with each Access Unit, which indicates the timing that should be adopted for submission of that access unit to the decoder. A Presentation Time Stamp (PTS) is also employed to indicate the desired timing of the delivery of Presentation Units at the output of the decoder. The difference between these time points represent the delay allocated to the decoding operation.

The Access Units encoded by MLP each include, in a header, data indicating the length of that particular Access Unit. Some Access Units, for example 1 in every 8, include longer headers which also include control data indicating the peak data rate within the track. This peak data rate is known from the outset, because the encoder may be controlled to produce an encoded data stream having a maximum peak data rate.

This peak data rate may be 9.6 Mbits/sec in some cases. However, .the encoding operation may be controlled to ensure that a peak data rate for the audio stream is at a different level to the 9.6 Mbits/sec absolute maximum. This may be desired when video and audio data are to be stored on the disc, with the result that the audio data can not be read from the disc at the peak 9.6 Mbits/sec ,rate. In this case, the audio may be specified to have a peak rate of 6.144 MBits/sec, for example. For the encoding system to be able to provide the encoded stream with the desired peak data rate, it requires a certain amount of look-ahead capability during the encoding process; this may amount to approximately 1 second.

As shown in Figure 5, the MLP encoder comprises an encoder core 12 and a FIFO buffer 14. The encoded audio is packaged ready for writing to sectors of the disc, and combined with sectors containing encoded non-audio data at a multiplexer 16 for authoring onto the DVD 20. The encoding of the non-audio data is not considered in this text.

The DVD reader includes a demultiplexer 22 which receives the data from sectors of the disc 20, and provides one output for audio data, and another for non-audio data. The Access Units have variable length although they represent a constant amount of audio data (80 samples in the case of 96 KHz sampling). Thus, in terms of data packets, the data read from an MLP encoded disc comprises a variable rate packetised stream.
The audio data is supplied to a feed buffer 24 whose function is twofold. Firstly it covers the interruptions in the supply of data from the demultiplexer, and secondly it stores the data until the correct time (DTS) for each access unit to be supplied to the decoder. The decoder comprises the FIFO buffer 30 and a decoder cote 32. The FIFO buffers 14,30 in the encoder and decoder enable a reduction in the peak data rate stored on the disc.

The output of the feed buffer 24 is a serialised data stream. In general its rate will be 9.6 Mbits/sec or higher. If it is higher then each access unit will be serialised in a time less than the time between its DTS and the DTS of the following access unit, therefore there will be timing gaps between the serialised access units. The peak data rate of the stream is the minimum rate at which the access units could be serialised without one or more of the timing gaps becoming negative.

The output of the feed buffer is supplied to the decoder 28, and the data stream is timed according to the Decoder Time Stamps. Similarly, the output of the MLP decoder, which is the reconstructed Presentation Units, is timed according to the Presentation Time Stamps. The variable rate packetised audio stream read from an MLP encoded DVD may not be appropriate for transfer over certain transmission systems. For example some interfaces such as IEC61958 are intrinsically fixed rate. It is then necessary to pad to a fixed rate stream, if the fixed rate of the interface is hardwired or has an upper limit, the peak rate information from the access unit headers may be used to determine in advance whether the transmission of the track will be possible.

ATM is packet based, but there are protocols that support transmission of "CBR" (Constant Bit Rate) streams over ATM. Firewire (IEEE 1394) supports both fixed-rate and variable-rate "isochronous" transmission (as well as "asynchronous" transmission). When transmitting at a fixed rate over these systems it is advantageous to use as low a rate as possible (as determined from the peak rate information in the access unit headers) to leave as much bandwidth as possible free for use by other services. In fact variable-rate transmission is preferred over Firewire: here it is necessary to negotiate for peak bandwidth at the start of the transmission, and again to minimise the impact on other services it is advantageous to determine the lowest adequate rate from the peak rate information in the access unit headers.

A transcoder may convert the variable rate packetised audio stream into a fixed rate packetised stream suitable for interfaces operating at a fixed rate. The fixed rate is determined from the information stored in the Access Unit headers. Fixed rate interfaces may be employed for communication with external equipment, for example a surround decoder, or a digital loudspeaker with MLP input, or with the internal decoder of the DVD player. The decoder architecture can be simplified by providing a fixed rate stream.

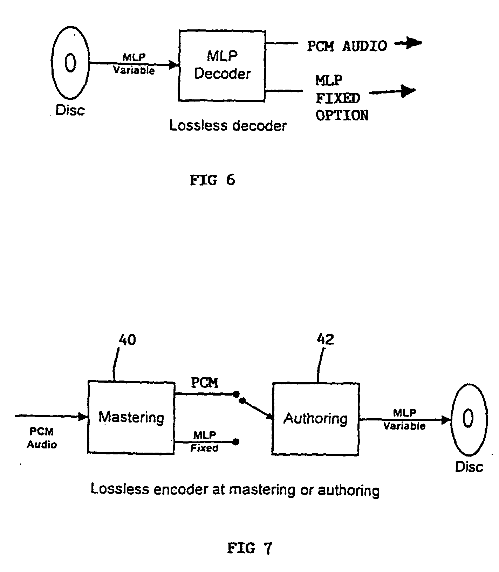

The transcoder is combined with a conventional decoder in the system shown in Figure 6, which has two possible outputs, a first conventional decoded output providing a stream of PCM audio, or an alternative output of fixed rate packetised data stream remaining in the MLP encoded domain. This output is provided without an intermediate decode and encode process.

The fixed rate packetised data stream may be provided by padding the ends of the variable length Access Units to result in a constant data rate. The amount of padding required will depend upon the timing interval between the start of the Access Unit and the following Access Unit. This time interval will not be constant, as a result of manipulation which can be performed by the encoder. This is explained below:

There is a maximum data rate of 9.6 Mbits/sec at which data can be stored on the DVD. To ensure that there is no passage of data exceeding this rate, it is possible to stretch (in time) the Access Unit boundaries to reduce the data rate. In other words, the timing of the Access Units is altered to reduce, the peak data rate, and the decoder time stamps are altered accordingly.

Thus, the encoder can be instructed to perform encoding; by manipulating the Access Unit configurations, such that a selected maximum data rate is not exceeded as explained above. This maximum data rate information is stored in the Access Unit headers.
Additional control data may be introduced into the headers to indicate the level of padding performed to a receiver within the fixed rate interface system. This receiver could be a further transcoder, or could be an MLP decoder, possibly simplified in that it accepts a fixed-rate input only.

As explained above, such a decoder could be incorporated into an appuratus providing additional functionality, such as a surround decoder. The transcoder within the DVD player is a 'lightweight' process which can preferably be incorporated into the custom silicon used to retrieve the data bits from the disc. The transcoder can also be tightly integrated with the buffering incorporated in the player, in order that the variable rate data can be optimally handled with minimal use of memory.

The use of fixed packet rate interface protocols may be simplified. As mentioned above, examples of possible use of the fixed rate packetised data stream is for transmission over serial interfaces such as IEC61958, MADI, and NVISION. In the IEEE 1394 Firewire protocol and in the ISO_Ethernet protocol, bandwidth can be negotiated and reserved prior to transmission. Consequently, there is also a desire to reduce the bandwidth of a signal for transmission over such an interface. This can be achieved by reducing the peak data rate to a minimum level.

If data is stored on the disc as a fixed rate stream, it may be possible to reserialise the data to obtain such a reduction in the data rate. This reserialisation involves writing the access unit data at a lower data rate, which lengthens the Access Units, and this may be carried out to a limit just before the access units would overlap. In other words, reserialisation at a lower rate closes the gaps between access units. Therefore, the access unit headers in accordance with another aspect of the invention include an indication of the minimum data rate to which the data could be reserialised. This may again be in the form of control data accompanying the encoded data. This would allow the lowest possible bandwidth to be reserved for each audio track, thus freeing as much bandwidth as possible for other traffic on the interface.

Data padding, for conversion from variable rate to fixed rate, and re-serialisation, for conversion from one fixed rate to a lower fixed rate, are each a relatively trivial process. The transcoder for these operations may therefore be used if the track was encoded at a higher fixed rate, or at a variable rate. This fixed rate output, referenced "MLP Fixed Option" in Figure 6, of course comprises a constant bandwidth signal. Thus, fixed bandwidth may be allocated to the audio data on a track by track basis for transmission over the Firewire interface. Minimising data rate over Firewire has the advantage of leaving as much bandwidth as possible available for other isochronous transmissions that also need to reserve bandwidth.

As already mentioned, greater reductions in data rate can be achieved by repacketising. This involves re-doing the packetising process performed by the encoder, which we now briefly described.

The buffering operation provided by the FIFO buffers in the encoder and decoder may be controlled in different ways, depending upon the desired system characteristics. As explained with reference to Figure 5, for a real-time transmission system, the amount of data stored in the two buffers in combination contributes towards the total delay of the encoding and decoding operation. The total delay should be constant and as small as possible.

It is important to ensure that the decoder always has data available for decoding to avoid any interruption in the data transfer. One strategy, suitable for real-time transmission of the data, for example over a radio link, is to provide a fixed total FIFO delay and to send as much data as possible from the encoder to the decoder at each instant. This maximises the amount of data in the decoder buffer during the transmission.

If the encoded data is for storage on a DVD by a disc authoring system, the real time constraints are no longer present, and it is possible to analyse the data for a full track before the authoring operation. This makes it possible to control the data levels in the buffers in a different way, to take account of the data to be encoded at future times during the track.

The buffer may be utilised during encoding so that there is minimum delay during decoding, by arranging the decoder buffer to be empty as much as possible. The decoder buffer is filled with data when a high data rate audio passage (e.g. of high treble energy) is approaching. The size of the decoder buffer must be taken into account in the encoding operation.

The amount by which the decoder's buffer needs to be filled in advance of a high rate passage depends on the allowed peak data rate. When authoring to a variable rate stream on the disc, and in the absence of other considerations, this peak data rate can be made the maximum of 9.6 Mbits/s, in order to minimise the decoding delay. However, if other services such as moving pictures are to be stored alongside, then a lower peak data rate may be desirable. If authoring to a fixed-rate stream on the disc, it will generally be desired to use the lowest data-rate possible, in order to maximise the playing time.

A further aspect of the invention provides an alternative encoding method that uses an indication of the minimum data rate to which the sample can be re-packetised, which information is provided by the mastering system along with the stream. Repacketising involves adjusting the starting times (the DTS's) to increase the gaps between some of the packets, to achieve still lower data rates, subject to the constraint of an assumed buffer size in the decoder.

For a given FIFO buffer size in the decoder, it is possible, after receiving the full data stream, to determine the minimum data rate at which the data stream can be packetised. Essentially, this involves manipulating the timing boundaries between Access Units for an assumed data rate. The length of the Access Units will be governed by the serialisation of the Access Units at the assumed data rate. The constraint as to the extent by which the timing points between Access Units can manipulated is the decoder buffer size, because it must never be allowed to overfill. This is a somewhat heavier process than re-serialisation or padding.

The assumed data rate is reduced iteratively until a minimum is found at which the data stream can be transmitted. Thus, mathematical modelling is performed iteratively. This consumes negligible computer time if it is performed by the bisection method, or one of the other efficient methods of univariate inverse interpolation. The data required to perform this modelling comprises a note of the length (in bits) if each access unit. It requires much less storage space than the encoded signal itself, and it is easily output by the encoder along with the encoded stream.

The data to be authored onto the disc or provided to an interface is eventually subjected to a transcoding operation to produce the minimum rate packetised stream, taking into account the decoder FIFO. This may be a fixed rate packetised stream or a variable rate stream with a capped maximum data rate.

As shown in Figure 7, the writing of data to a DVD involves a Mastering Stage 40 and an authoring stage 42. The Mastering Stage 40 can be controlled in conventional manner to provide a PCM stream, labelled "PCM", which is subsequently encoded using MLP and provided on the DVD using an authoring system. This sequence is shown in Figure 7.

According to this aspect of the invention, the Mastering Stage 40 also has capability for MLP encoding. Therefore, writing of data on the DVD disc (or other storage medium) will rely on one or other of the two stages for the MLP encoding. The Mastering Stage thus provides a fixed rate MLP encoded packetised stream, labelled "MLP Fixed" in Figure 7, which can then be authored onto a DVD or CD Rom, or other storage medium. The transfer of the "MLP Fixed" data stream by an authoring system onto disc is not shown in Figure 7. This MLP fixed stream includes an indication of the minimum data rate to which the stream could be repacketised, as determined, during (or after) the MLP encoding.

The fixed rate of the "MLP Fixed" output does not at this stage need to correspond to this minimum fixed data rate at which the DVD can be authored, since the subsequent Authoring Stage (not shown) can perform further transcoding to the desired minimum rate. There can be good reasons for mastering to a higher rate: one is to avoid the possibility of an unexpected loud signal from exceeding the permitted rate; another is that a fixed-rate MLP stream may be recorded on standard studio equipment that is intended for normal PCM audio, and one may then have to choose between a small number of standard data-rates.

The minimum fixed rate will depend upon the size of the decoder FIFO buffer 30, as explained above, and the indicated minimum rate assumes a given FIFO buffer size. The encoder may note the rate for each of several different assumptions about the decoding specification (in order to assist possible subsequent transcoding, such as repacketisation in the player to the lowest possible peak rate for transmission over Firewire, as explained above). For example, a decoder at the receiving end of a Firewire bus could have a much bigger FIFO than the 90 Kilobytes specified for a DVD player.

This minimum rate information is stored at the start of the output file, so that the Authoring can determine the desired rate for transmission. This avoids the requirement for the authoring stage to perform a pre-scan in order to determine the minimum rate for subsequent transmission. The minimum rate at which fixed-rate packetisation is possible can also be used as an upper bound of the data rate of a variable rate stream derived from the fixed rate stream. Repacketising to obtain a data stream at the minimum data rate may be performed by a DVD player to provide an output of minimum bandwidth for transmitting on a data bus, for example a Firewire network carrying multiple services around the home.

The Mastering Stage may also note the total amount of data, other than the padding, for the track. This is equal to the total amount of data in a variable-rate stream derived from the fixed-rate stream, and may be used by a mastering system to estimate the available playing time in a disc composed of several tracks.

Fixed rate packetised audio may be desired even on a storage medium such as DVD which can handle variable rate transmission, if the audio data on the storage medium is to accompany variable rate video data, such as for digital cinema data. The fixed rate audio data on the disc then facilitates timing operations for the decoding circuitry. Fixed rate streams are also desirable for storage on other carriers such as CD or magnetic tape.

Studio audio equipment also frequently requires fixed rate packetised data streams, and authoring such data streams directly onto the storage medium simplifies this. The invention may also be applied to the CD format. Modifications and variations will be apparent to those skilled in the art.

## Claims

1. An encoder (12) for producing an encoded packetised stream, including means for determining the minimum data rate to which the stream could be repacketised for successful decoding by a decoder (32) having a given FIFO buffer (30) size and means for introducing into the stream control data representing this minimum data rate.

2. An encoder as claimed in claim 1, wherein the encoded stream is losslessly compressed digital audio data.

3. A mastering system (40) including an encoder (12) as claimed in claim 1.

4. A system including a mastering system (40) as claimed in claim 3, and means for repacketising the data to form a stream having a peak data rate calculated in dependence upon the control data.

5. A system as claimed in claim 4, wherein the stream having a peak data rate corresponding to the control data includes a fixed rate stream.

6. A system for providing encoded data to a DVD including a mastering system (40) as claimed in claim 3, and means for writing the control data onto the disc with the encoded data.

7. A system for providing encoded data to a DVD including a mastering system (40) and an authoring system (42), the authoring system including an encoder (12) as claimed in claim 1.

8. A system as claimed in any one of claims 4 to 7, wherein the encoder (12) includes an MLP lossless encoder for audio data.

## Patentansprüche

1. Kodierer (12) zum Erzeugen eines kodierten, paketierten Stroms, mit einer Einrichtung, die die Mindestdatenrate ermittelt, auf die der Strom zur erfolgreichen Dekodierung mittels eines Dekodierers (32), der eine gegebene FIFO-Puffergröße (30) hat, neupaketiert werden könnte, und einer Einrichtung, die in den Strom Steuerdaten einführt, welche diese Mindestdatenrate wiedergeben.

2. Kodierer nach Anspruch 1, bei dem der kodierte Strom verlustfrei komprimierte, digitale Audiodaten sind.

3. Mastering-System (40) mit einem Kodierer (12) nach Anspruch 1.

4. System mit einem Mastering-System (40) nach Anspruch 3, und einer Einrichtung zum Neupaketieren der Daten zur Schaffung eines Stroms, der eine in Abhängigkeit von den Steuerdaten berechnete Spitzendatenrate hat.

5. System nach Anspruch 4, bei dem der Strom, der eine den Steuerdaten entsprechende Spitzendatenrate hat, einen Strom fester Datenrate umfaßt.

6. System zur Schaffung kodierter Daten auf einer DVD, einschließlich eines Mastering-Systems (40) nach Anspruch 3 und einer Einrichtung zum Schreiben der Steuerdaten auf die platte mit den kodierten Daten.

7. System zur Schaffung kodierter Daten auf einer DVD, einschließlich eines Mastering-Systems (40) und eines Authoring-Systems (42), wobei das Authoring-System einen Kodierer (12) nach Anspruch 1 umfaßt.

8. System nach einem der Ansprüche 4 bis 7, bei dem der Kodierer (12) einen MLP verlustfreien Kodierer für Audiodaten umfaßt.

## Revendications

1. Codeur (12) pour produire un flux empaqueté codé, comprenant des moyens pour déterminer le débit minimal auquel le flux pourrait être ré-empaqueté pour un décodage réussi par un décodeur (32) ayant une dimension donnée de tampon FIFO (30) et des moyens pour introduire dans le flux des données de commande représentant ce débit minimal.

2. Codeur selon la revendication 1, où le flux codé est composé de données audio numériques comprimées sans perte.

3. Système de matriçage (40), comprenant un codeur (12) selon la revendication 1.

4. Système comprenant un système de matriçage (40) selon la revendication 3, et des moyens pour ré-empaqueter les données pour former un flux ayant un débit de pointe calculé en fonction des données de commande.

5. Système selon la revendication 4, où le flux ayant un débit de pointe correspondant aux données de commande comprend un flux à débit fixe.

6. Système pour fournir des données codées à un DVD, comprenant un système de matriçage (40) selon la revendication 3, et des moyens pour écrire les données de commande sur le disque avec les données codées.

7. Système pour fournir des données codées à un DVD, comprenant un système de matriçage (40) et un système de médiatisation (42), le système de médiatisation comprenant un codeur (12) selon la revendication 1.

8. Système selon l'une quelconque des revendications 4 à 7, où le codeur (12) comprend un codeur sans perte MLP pour données audio.
